# EUROPÄISCHE PATENTANMELDUNG

(11) **EP 1 186 556 A1**
(43) Veröffentlichungstag der Anmeldung: **13.03.2002**
(21) Anmeldenummer: 01119317.4
(22) Anmeldetag: 10.08.2001
(51) Int. Cl.: B65G 15/02, B65G 23/44

(54) **Fördervorrichtung**

(30) Priorität: 07.09.2000 DE 20015458 U
(71) Anmelder: Max Dörr GmbH, 75050 Gemmingen (DE)
(72) Erfinder: Dörr, Thomas, 74889 Sinsheim (DE)
(74) Vertreter: Reimold, Otto, Dipl.-Phys.Dr.

(57) **Zusammenfassung**

Eine Fördervorrichtung (1) weist ein motorisch antreibbares, um Umlenkwalzen (3,4) endlos umlaufendes Förderband (2) auf, wobei mindestens eine Umlenkwalze eine drehfest am Gestell (7) der Fördervorrichtung gelagerte Walzenachse (19) aufweist. Mindestens eine drehfest gelagerte Walzenachse (19) ist im Falle eines linear verlaufenden Förderbandes mit ihren beiden Achsendbereichen und im Falle eines gebogen verlaufenden Förderbandes (2) mindestens mit ihrem radial außen angeordneten Achsendbereich (23) in Förderband-Längsrichtung (21) zwischen einer das Förderband (2) gespannt haltenden Spannstellung und einer Entspannstellung bewegbar gelagert und über eine an einem Spannteil (27) angeordnete Kurvenfläche (25) gegen eine gestellseitige Stützfläche (26) abgestützt. Das Spannteil (27) ist um eine Drehachse (28) verdrehbar und die Kurvenfläche (25) exzentrisch zur Drehachse (28) angeordnet derart, dass sich der jeweilige Achsendbereich (23) beim Verdrehen der Kurvenfläche (25) in Förderband-Längsrichtung (21) verlagert.

## Beschreibung

Die Erfindung betrifft eine Fördervorrichtung mit einem motorisch antreibbaren, um Umlenkwalzen endlos umlaufenden Förderband, wobei mindestens eine Umlenkwalze eine drehfest am Gestell der Fördervorrichtung gelagerte Walzenachse aufweist.

Bei einer solchen Fördervorrichtung steht das Förderband in seiner Längsrichtung unter Vorspannung, so dass es einen entsprechend straffen Verlauf aufweist. Dies erschwert das Auswechseln des Förderbandes, wenn es beschädigt ist und durch ein neues Förderband ersetzt werden soll.

Ausgehend hiervon liegt der vorliegenden Erfindung die Aufgabe zugrunde, eine Fördervorrichtung der eingangs genannten Art so auszubilden, dass sich das Förderband mit wenigen Handgriffen schnell und problemlos spannen und entspannen lässt.

Diese Aufgabe wird erfindungsgemäß dadurch gelöst, dass mindestens eine drehfest gelagerte Walzenachse im Falle eines linear verlaufenden Förderbandes mit ihren beiden Achsendbereichen und im Falle eines gebogen verlaufenden Förderbandes mindestens mit ihrem radial außen angeordneten Achsendbereich in Förderband-Längsrichtung zwischen einer das Förderband gespannt haltenden Spannstellung und einer Entspannstellung bewegbar gelagert und über eine an einem Spannteil angeordnete Kurvenfläche gegen eine gestellseitige Stützfläche abgestützt ist, wobei das Spannteil um eine Drehachse verdrehbar und die Kurvenfläche exzentrisch zur Drehachse angeordnet ist, derart, dass sich der jeweilige Achsendbereich beim Verdrehen der Kurvenfläche in Förderband-Längsrichtung verlagert.

Bei an der Fördervorrichtung montiertem Förderband befindet sich der jeweilige Achsendbereich in seiner dem entgegengesetzten Förderbandende mit Bezug auf die Entspannstellung weiter entfernten Spannstellung, so dass das Förderband im gespannten Zustand umläuft. Will man diese Spannung zum Entfernen des Förderbandes beseitigen, muss lediglich das Spannteil in der betreffenden Richtung verdreht werden, so dass sich der Achsendbereich etwas zum entgegengesetzten Förderbandende hin in die Entspannstellung verlagert. Nach dem Aufbringen des neuen Förderbandes verdreht man das Spannteil in die entgegengesetzte Richtung, so dass der Achsendbereich wieder in seine Spannstellung überführt wird.

Es ist ersichtlich, dass keine aufwendigen Montagearbeiten anfallen. Zum Verdrehen des Spannteils wird nur ein sehr einfaches Werkzeug benötigt. Außerdem ist der erforderliche Drehweg verhältnismäßig kurz, so dass sich insgesamt eine einfache, wenig Zeit in Anspruch nehmende Handhabung ergibt.

Auch der konstruktive Aufwand ist gering. Dementsprechend niedrig sind die Gestehungskosten.

Handelt es sich um ein linear verlaufendes Förderband, sollten beide Achsendbereiche auf die genannte Weise gelagert und abgestützt sein, so dass die betreffende Umlenkwalze insgesamt verlagert werden kann. Bei einem gebogen verlaufenden Förderband genügt dagegen ein Überführen des radial außen liegenden Achsendbereichs in die Entspannstellung, da ein solches Förderband nach radial innen hin von den Umlenkwalzen abgezogen wird, so dass sich das Förderband praktisch sofort von den radial innen liegenden Achsendbereichen löst.

Der jeweilige Achsendbereich ist zweckmäßigerweise unter der Wirkung der in der Spannstellung vom Förderband in Förderband-Längsrichtung auf die zugehörige Umlenkwalze ausgeübten Spannkraft über die Kurvenfläche gegen die Stützfläche abgestützt.

Dabei ist zweckmäßigerweise vorgesehen, dass die Kurvenfläche von der Umfangsfläche eines verdrehbar auf dem jeweiligen Endbereich gelagerten, das Spannteil bildenden Exzenterelements gebildet wird.

Das Spannteil kann durch einen neben dem zugewandten Längsrand des Förderbandes verlaufenden Spalt hindurch betätigbar sein.
Dabei kann das Spannteil mindestens eine an seinem Umfang angeordnete Betätigungsausnehmung zum Eingreifen eines Betätigungswerkzeugs aufweisen. Das Betätigungswerkzeug kann durch den genannten Spalt in eine der Betätigungsausnehmungen eingeführt werden, so dass man das Spannteil verdrehen kann.

Damit beim Montieren das Erreichen der Spannstellung sozusagen erfühlt werden kann, weist die Kurvenfläche zweckmäßigerweise einen ebenen Bereich auf, mit dem das Spannteil in seiner der Spannstellung entsprechenden Drehlage an der entsprechend ebenen Stützfläche anliegt.

Die in der Spannstellung auftretende Spannung des Förderbandes kann veränderbar und somit an die jeweiligen Erfordernisse anpassbar sein. Hierzu ist vorgesehen, dass die Stützfläche an einem in Förderband-Längsrichtung verstellbaren Stützteil angeordnet ist. Da die Stützfläche die Längslage des Spannteils und somit des Achsendbereichs bestimmt, verändert sich die Förderbandspannung in Abhängigkeit von der Lage des Stützteils.

Weitere zweckmäßige Ausgestaltungen sind in den Unteransprüchen angegeben.

Nachstehend wird ein Ausführungsbeispiel der Erfindung anhand der Zeichnung beschrieben. Es zeigen:
- Fig. 1: eine gebogen verlaufende Fördervorrichtung in stark schematisierter Darstellung in Draufsicht von oben,
- Fig. 2: die Fördervorrichtung nach Fig. 1 in Stirnansicht gemäß Pfeil II, wobei jedoch nur der radial außen liegende Bereich dargestellt und das Förderband weggelassen und nur durch eine strichpunktierte Umrisslinie angedeutet ist, und
- Fig. 3: die Anordnung nach Fig. 2 im vertikalen Längsschnitt gemäß der Schnittlinie III-III in den Fig. 1 und 2.

Eine Fördervorrichtung 1 weist ein endlos umlaufendes Förderband 2 auf, das um zwei an den einander entgegengesetzten Enden angeordnete Umlenkwalzen 3,4 umläuft, so dass sich ein oberes Bandtrum 5 und ein unteres Bandtrum 6 ergibt. Die Umlenkwalzen 3,4 werden von einem Vorrichtungsgestell 7 gehalten, von dem nur die beiden den einander entgegengesetzten Längsrändern 8,9 des Förderbandes 2 benachbarten Längsträger 10,11 dargestellt sind, die beim Ausführungsbeispiel von Längsprofilteilen gebildet werden, die an ihrer dem Förderband 2 zugewandten Seite mit Abstand übereinander angeordnete Längsnuten 12,13,14,15,16 aufweisen.

Das Förderband 2 ist motorisch zu seiner Umlaufbewegung antreibbar. Hierzu kann eine Antriebswalze 17 von außen her in den Zwischenraum zwischen den beiden Bandtrumen 5,6 greifen, die mittels einer motorischen Antriebseinrichtung 18 angetrieben werden kann und am Förderband 2 angreift, so dass dieses umläuft.

Die beiden Umlenkwalzen 3,4 weisen jeweils eine über die Förderbandbreite durchgehende Walzenachse 19 auf, die drehfest am Vorrichtungsgestell 7, beim Ausführungsbeispiel an dessen Längsträger 10,11 gelagert ist. Auf der Walzenachse 19 sind mehrere Einzelwalzen 20 hintereinander angeordnet, die jeweils für sich drehbar gelagert sind.

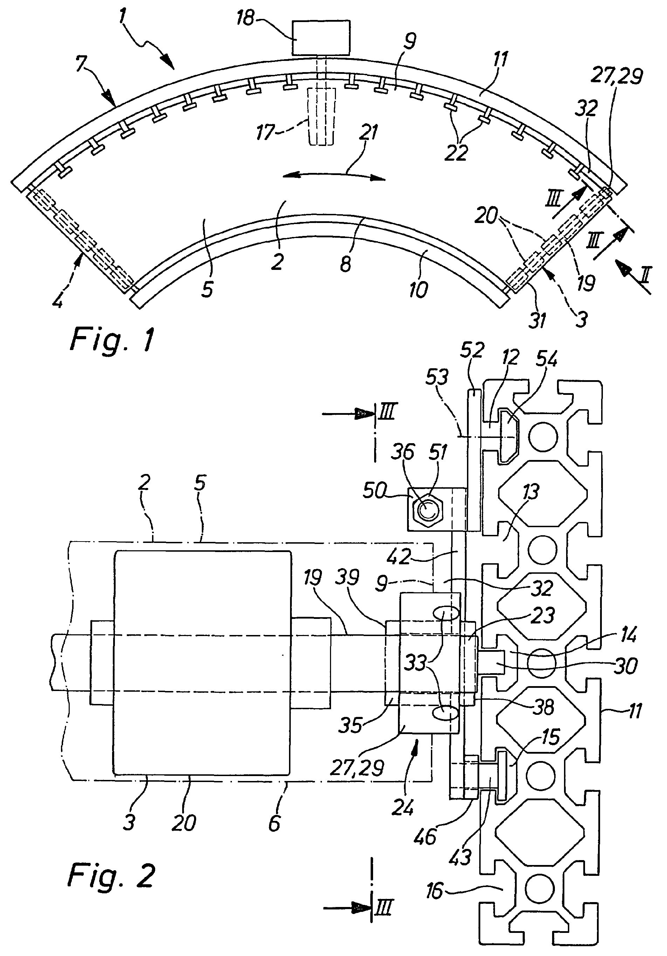

Die Aufteilung in die Einzelwalzen 20 hängt damit zusammen, dass das Förderband 2 gebogen verläuft, wie aus Fig. 1 hervorgeht. Im dargestellten Falle handelt es sich um einen Kreisbogen mit 90°. Die Winkelerstreckung kann jedoch auch anders sein. Aufgrund des gebogenen Verlaufs ergeben sich an dem radial inneren Längsrand 8 und dem radial äußeren Längsrand 9 des Förderbandes 2 unterschiedliche Bandgeschwindigkeiten.

Damit das Förderband 2 seinen gebogenen Verlauf beibehält, muss es im Bereich des äußeren Längsrandes 9 entsprechend geführt und gehalten werden. Dies wird mittels einer geeigneten Führungseinrichtung erreicht, die im vorliegenden Zusammenhang nicht weiter interessiert. In Fig. 1 sind in Längsrichtung 21 des Förderbandes 2 dem äußeren Längsträger 11 entlang mit Abstand aufeinander folgende Niederhalterollen 22 der Führungseinrichtung angedeutet, die das obere Bandtrum 5 nach unten halten. Entsprechende Niederhalterollen halten das untere Bandtrum 6 nach oben. Zwischen den beiden Bandtrumen 5,6 befindet sich eine geeignete Gegenanlage.

Die Führungseinrichtung könnte jedoch, wie schon angedeutet, auch anders ausgebildet sein.

Die einzelnen Teile der Führungseinrichtung können an den Längsnuten 12 bis 16 des Längsträgers 11 befestigt sein.

Der radial außen angeordnete Achsendbereich 24 der Walzenachse 19 ist in Förderband-Längsrichtung 21 zwischen einer das Förderband 2 gespannt haltenden Spannstellung und einer Entspannstellung bewegbar gelagert. In der Zeichnung befindet sich der Achsendbereich 23 in seiner Spannstellung, die das Förderband während seines Betriebs einnimmt. Bewegt man den Achsendbereich 23 etwas zur entgegengesetzten Umlenkwalze 4 hin, wird das Förderband 2 entspannt, so dass es seine Entspannstellung einnimmt.

Will man das Förderband 2 entfernen und ein neues Förderband anbringen, wird der Achsendbereich 23 in die Entspannstellung überführt. Das Abziehen des Förderbandes 2 erfolgt dann nach radial innen hin. Aufgrund des gebogenen Verlaufs des Förderbandes 2 kommt das Förderband 2 radial innen sofort von den beiden Umlenkwalzen 3,4 frei, so dass es ausreicht, nur den äußeren Achsendbereich 23 bewegbar zu lagern.

Im Falle eines linear verlaufenden Förderbandes müssten beide Achsendbereiche der einen und/oder anderen Umlenkwalze bewegbar gelagert werden.

Das Verstellen des Achsendbereichs 23 erfolgt mittels einer Schnellspanneinrichtung, so dass praktisch nur ein Handgriff erforderlich ist. Hierzu ist der Achsendbereich 23 über eine Kurvenfläche 25 gegen eine gestellseitige Stützfläche 26 abgestützt. Dabei wird die Kurvenfläche 25 von einem Spannteil 27 gebildet, das um eine Drehachse 28 verdrehbar ist. Die Kurvenfläche 25 ist exzentrisch zu dieser Drehachse 28 angeordnet, so dass sich der Achsendbereich 23 beim Verdrehen der Kurvenfläche 25 in Förderband-Längsrichtung 21 verlagert.

Aus der Zeichnung geht ferner hervor, dass die Kurvenfläche 25 von der Umfangsfläche eines das Spannteil 27 bildenden Exzenterelements 29 gebildet wird, das verdrehbar auf dem Achsendbereich 23 der Walzenachse 19 gelagert ist. Dabei weist die Kurvenfläche 25 zweckmäßigerweise Kreisgestalt auf.

Die Walzenachse 19 ist, wie bereits erwähnt, drehfest mit dem Vorrichtungsgestell 7 verbunden. Hierzu kann ein stirnseitiger Lagerfortsatz 30 des Achsendbereichs 23 in eine der Längsnuten, beim Ausführungsbeispiel in die Längsnut 14, des Längsträgers 11 eingreifen und eine von einem Kreis abweichende, insbesondere mindestens eine Flachseite bildende Umfangsgestalt aufweisen. Verdreht man auf dem Achsendbereich 23 das Exzenterelement 29, stützt sich dieses mit einem anderen Bereich seiner Kurvenfläche 25 gegen die Stützfläche 26 ab, so dass sich der Achsendbereich 23 entsprechend verlagert.

Die Kurvenfläche 25 und die Stützfläche 26 werden durch geeignete Mittel gegeneinander gehalten. Hierzu ist zweckmäßigerweise vorgesehen, dass der Achsendbereich 23 unter der Wirkung der in der Spannstellung vom Förderband 2 in Förderband-Längsrichtung 21 auf die zugehörige Umlenkwalze 3 ausgeübten Spannkraft über die Kurvenfläche 25 gegen die Stützfläche 26 abgestützt ist.

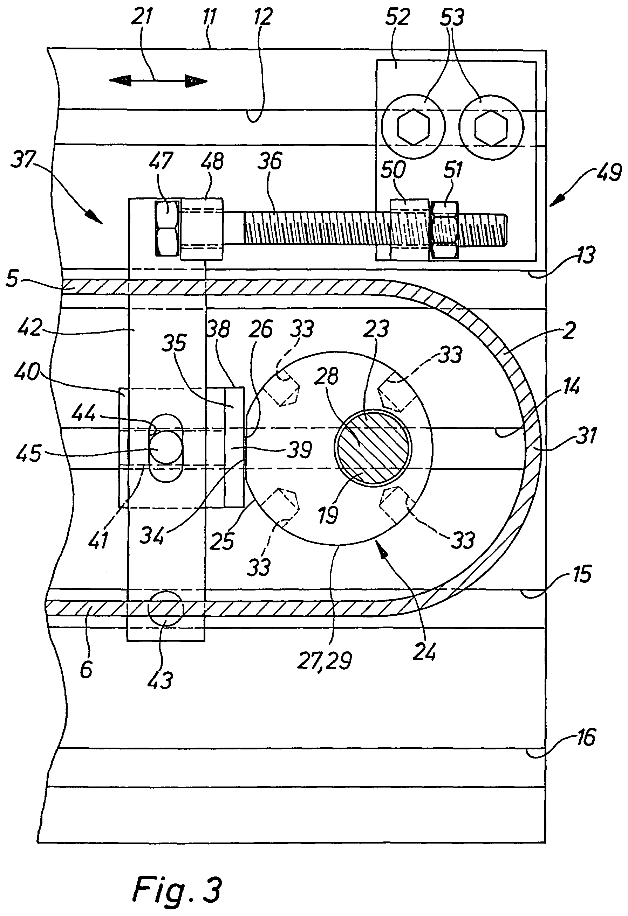

Die Walzenachse 19 und somit der Achsendbereich 23 mit dem auf ihm sitzenden Exzenterelement 29 befindet sich beim Ausführungsbeispiel zwischen dem die Umlenkwalze 3 umschlingenden Umschlingungsbereich 31 des Förderbandes 2 und der Stützfläche 26, so dass in der insbesondere aus Fig. 3 hervorgehenden Spannstellung, in der der Achsendbereich 23 seine am weitesten von der Stützfläche 26 entfernte Lage einnimmt, der Förderband-Umschlingungsbereich 31 den Achsendbereich 23 und daher das Exzenterelement 29 zur Stützfläche 26 hin beaufschlagt. Beim Verdrehen des Exzenterelementes 29 verkürzt sich der Abstand zwischen dem Achsendbereich 23 und der Stützfläche 26, so dass die Förderbandspannung nachlässt.

Das Spannteil 27 bzw. das Exzenterelement 29 kann von außen her betätigt werden. Hierzu verläuft neben dem betreffenden Längsrand 9 des Förderbandes 2 ein Betätigungsspalt 32, durch den hindurch das Spannteil 27 erreichbar und betätigbar ist. Der Betätigungsspalt 32 wird außen von dem Längsträger 11 des Vorrichtungsgestells 7 begrenzt.

Das Spannteil 27 weist an seinem Umfang mindestens eine Betätigungsausnehmung 33 zum Eingreifen eines Betätigungswerkzeugs auf. Im dargestellten Falle sind vier über den Umfang verteilte Betätigungsausnehmungen 33 in Gestalt von Bohrungen vorhanden, so dass ein Betätigungswerkzeug in Gestalt eines Bolzens eingesteckt werden kann. Sodann lässt sich das Spannteil 27 verdrehen.

Die Kurvenfläche 25 kann, wie aus der Zeichnung ersichtlich, einen ebenen Kurvenbereich 34 aufweisen, mit dem das Spannteil 27 in seiner der Spannstellung entsprechenden Drehlage an der entsprechend ebenen Stützfläche 26 anliegt. Auf diese Weise erhält man sozusagen ein Verrasten des Spannteils 27 in der Spannstellung, so dass das Spannteil 27 beim überführen in die Endspannstellung sozusagen einen Druckpunkt überwinden muss, der einer erhöhten Förderbandspannung entspricht.

Die Spannkraft, mit der das Förderband 2 in der Spannstellung des Achsendbereichs 23 gespannt ist, kann beim Ausführungsbeispiel verändert werden. Hierzu ist die Stützfläche 26 an einem in Förderband-Längsrichtung 21 verstellbaren Stützteil 35 angeordnet. Dabei ist das Stützteil 35 am Vorrichtungsgestell 7 in Förderband-Längsrichtung 21 geführt angeordnet und mittels einer eine Verstellspindel 36 enthaltenden Verstelleinrichtung 37 verstellbar. Beim Ausführungsbeispiel wird das Stützteil 35 von einem im zu den Fig. 2 und 3 rechtwinkeligen Schnitt L-ähnlichen Winkelstück 38 gebildet, dessen quer zum Gestell-Längsträger 11 gerichteter Schenkel 39 die Stützfläche 26 bildet und dessen anderer Schenkel 40 am Längsträger 11 in Längsrichtung 21 verschieblich gelagert ist, beispielsweise indem an dem Schenkel 40 außen, d.h. in Fig. 3 unterhalb der Zeichenebene, ein Nutenstein 41 angeordnet ist, der in die Längsnut 14 des Gestell-Längsträgers 11 eingreift.

Die Verstelleinrichtung 37 weist einen quer zur Förderbandebene, d.h. in Richtung des Abstandes zwischen den beiden Bandtrumen 5,6, verlaufenden Verstellarm 42 auf, der einenends, beim Ausführungsbeispiel mit seinem unteren Ende, schwenkbar mit dem Vorrichtungsgestell 7 verbunden und andernends, beim Ausführungsbeispiel mit seinem oberen Endbereich, mit der in Förderband-Längsrichtung 21 gerichteten Verstellspindel 36 verbunden ist, wobei das Stützteil 35 mit dem mittleren Bereich des Verstellarms 42 in gelenkiger Mitnahmeverbindung steht.

Die verschwenkbare Verbindung des Verstellarms 42 mit dem Vorrichtungsgestell 7 erfolgt mittels eines Lagerbolzens 43, der vom Verstellarm 42 absteht und in die benachbarte Längsnut 15 des Gestell-Längsträgers 11 eingreift.

Durch die gelenkige Mitnahmeverbindung zwischen dem Verstellarm 42 und dem Stützteil 35 wird die Schwenkbewegung des Verstellarms 42 in die Linearbewegung des Stützteils 25 in Längsrichtung 21 umgesetzt. Beim Ausführungsbeispiel weist der Verstellarm 42 hierzu ein sich in Verstellarm-Längsrichtung erstreckendes Langloch 44 auf, in dem ein vom Stützteil 35 abstehender Lagerzapfen 45 verschieblich und außerdem verschwenkbar geführt ist.

Der Verstellarm 42 ist an der dem Gestell-Längsträger 11 abgewandten Seite des Schenkels 40 des Winkelstücks 38 angeordnet. Dementsprechend steht an der einen Seite des Schenkels 40 der Nutenstein 41 und an der entgegengesetzten Seite des Schenkels 40 der Lagerzapfen 45 ab.

Das schwenkbar mit dem Vorrichtungsgestell 7 verbundene Ende des Verstellarms 42 wird beim Ausführungsbeispiel durch einen Unterlegring 46 im Abstand zum Gestell-Längsträger 11 gehalten. Der Unterlegring 46 ist auf den in die Längsnut 15 eingreifenden und in dieser verdrehbar gelagerten Lagerbolzen 43 aufgesteckt.

Beim Verschwenken des Verstellarms 42 mittels der Verstellspindel 36 verlagert sich das Stützteil 35 und somit die Stützfläche 26 in Förderband-Längsrichtung 21, so dass man die in der Spannstellung der Umlenkwalze 3 auftretende Förderbandspannung einstellen kann.

Die Verstellspindel 36 ist beim Ausführungsbeispiel verdrehfest mit dem Verstellarm 42 verbunden und behält beim Verstellen seine Längslage mit Bezug auf den Verstellarm 42 bei. Bei der dargestellten Verstellspindel 36 handelt es sich um einen Gewindebolzen, dessen mehrkantiger Bolzenkopf 47 mit einer seiner Flachseiten seitlich am Verstellarm 42 anliegt, so dass ein die Verstellspindel 36 gegen Verdrehen sichernder Formschluss vorhanden ist. Die Verstellspindel 36, d.h. der Gewindeschaft des die Verstellspindel bildenden Gewindebolzen, durchgreift ein am Verstellarm 42 angeordnetes Lagerauge 48 und erstreckt sich zur zugewandten Stirnseite 49 des Vorrichtungsgestells 7 hin. Dabei ist die Verstellspindel 36 durch ein feststehend mit dem Vorrichtungsgestell 7 verbundenes Lagerauge 50 geführt. Vom freien Ende der Verstellspindel 36 her ist auf diese eine Verstellmutter 51 aufgeschraubt, die sich am Lagerauge 50 abstützt.

Durch die vom Förderband 2 ausgeübte Spannkraft wird der Verstellarm 42 und somit die Verstellspindel 36 in Richtung von dem gestellfesten Lagerauge 50 weg belastet, so dass die Verstellmutter 51 an dem Lagerauge 50 gehalten wird. Beim Verdrehen der Verstellmutter 51 verlagert sich die Verstellspindel 36 in Längsrichtung 21, so dass der Verstellarm 42 verschwenkt und damit die Stützfläche 26 verlagert wird.

Der Verstellarm 42 greift am zugewandten Längsrand 9 des Förderbandes 2 vorbei, so dass sich die außerhalb des Förderbandes verlaufende Verstellspindel 36 zur Stirnseite 49 hin erstrecken und die Verstellmutter 51 von der Stirnseite 49 her betätigt werden kann.

Das die Verstellmutter 51 abstützende Lagerauge 50 sitzt an einer Tragplatte 52, die am Längsträger 11 festgelegt ist. Hierzu kann die Tragplatte 52 beispielsweise mittels Spannschrauben 53 und einem Nutenstein 54 am Längsträger 11 festgespannt werden.
Dies kann an einer der Längsträger-Längsnuten, beim Ausführungsbeispiel an der Längsnut 12, erfolgen.

## Patentansprüche

1. Fördervorrichtung mit einem motorisch antreibbaren, um Umlenkwalzen endlos umlaufenden Förderband, wobei mindestens eine Umlenkwalze eine drehfest am Gestell der Fördervorrichtung gelagerte Walzenachse aufweist, **dadurch gekennzeichnet, dass** mindestens eine drehfest gelagerte Walzenachse (19) im Falle eines linear verlaufenden Förderbandes mit ihren beiden Achsendbereichen und im Falle eines gebogen verlaufenden Förderbandes (2) mindestens mit ihrem radial außen angeordneten Achsendbereich (23) in Förderband-Längsrichtung (21) zwischen einer das Förderband (2) gespannt haltenden Spannstellung und einer Entspannstellung bewegbar gelagert und über eine an einem Spannteil (27) angeordnete Kurvenfläche (25) gegen eine gestellseitige Stützfläche (26) abgestützt ist, wobei das Spannteil (27) um eine Drehachse (28) verdrehbar und die Kurvenfläche (25) exzentrisch zur Drehachse (28) angeordnet ist, derart, dass sich der jeweilige Achsendbereich (23) beim Verdrehen der Kurvenfläche (25) in Förderband-Längsrichtung (21) verlagert.

2. Fördervorrichtung nach Anspruch 1, **dadurch gekennzeichnet, dass** der jeweilige Achsendbereich (23) unter der Wirkung der in der Spannstellung vom Förderband (2) in Förderband-Längsrichtung (21) auf die zugehörige Umlenkwalze (3) ausgeübten Spannkraft die Kurvenfläche (25) gegen die Stützfläche (26) abgestützt ist.

3. Fördervorrichtung nach Anspruch 2, **dadurch gekennzeichnet, dass** die Kurvenfläche (25) von der Umfangsfläche eines verdrehbar auf dem jeweiligen Achsendbereich (23) gelagerten, das Spannteil (27) bildenden Exzenterelements (29) gebildet wird.

4. Fördervorrichtung nach einem der Ansprüche 1 bis 3, **dadurch gekennzeichnet, dass** die Kurvenfläche (25) Kreisgestalt aufweist.

5. Fördervorrichtung nach einem der Ansprüche 1 bis 4, **dadurch gekennzeichnet, dass** das Spannteil (27) durch einen neben dem zugewandten Längsrand (9) des Förderbandes (2) verlaufenden Spalt (32) hindurch betätigbar ist.

6. Fördervorrichtung nach Anspruch 5, **dadurch gekennzeichnet, dass** das Spannteil (27) mindestens eine an seinem Umfang angeordnete Betätigungsausnehmung (33) zum Eingreifen eines Betätigungswerkzeugs aufweist.

7. Fördervorrichtung nach einem der Ansprüche 1 bis 6, **dadurch gekennzeichnet, dass** die Kurvenfläche (25) einen ebenen Bereich aufweist, mit dem das Spannteil (27) in seiner der Spannstellung entsprechenden Drehlage an der entsprechend ebenen Stützfläche (26) anliegt.

8. Fördervorrichtung nach einem der Ansprüche 1 bis 7, **dadurch gekennzeichnet, dass** die Stützfläche (26) an einem in Förderband-Längsrichtung (21) verstellbaren Stützteil (35) angeordnet ist.

9. Fördervorrichtung nach Anspruch 8, **dadurch gekennzeichnet, dass** das Stützteil (35) am Vorrichtungsgestell (7) in Förderband-Längsrichtung (21) geführt angeordnet und mittels einer eine Verstellspindel (36) enthaltenden Verstelleinrichtung (37) verstellbar ist.

10. Fördervorrichtung nach Anspruch 9, **dadurch gekennzeichnet, dass** die Verstelleinrichtung (37) einen quer zur Förderbandebene verlaufenden Verstellarm (42) aufweist, der einenends schwenkbar mit dem Vorrichtungsgestell (7) verbunden und andernends mit der in Förderband-Längsrichtung (21) gerichteten Verstellspindel (36) verbunden ist, wobei das Stützteil (35) mit dem mittleren Bereich des Verstellarms (42) in gelenkiger Mitnahmeverbindung steht.

11. Fördervorrichtung nach Anspruch 10, **dadurch gekennzeichnet, dass** der Verstellarm (42) am zugewandten Längsrand (9) des Förderbandes (2) vorbei verläuft und die Verstellspindel (36) sich zur zugewandten Stirnseite (49) des Vorrichtungsgestells (7) hin erstreckt, so dass die Verstelleinrichtung (37) von der Stirnseite (49) des Vorrichtungsgestells (7) her verstellbar ist.
